# FASCICULE DE BREVET EUROPEEN

(11) **EP 1 043 218 B1**
(45) Date de publication et mention de la délivrance du brevet: **12.01.2005**
(21) Numéro de dépôt: 99400806.8
(22) Date de dépôt: 01.04.1999
(51) Int. Cl.: B62D 35/00

(54) **Déflecteur aérodynamique à inclinaison réglable pour véhicule utilitaire**
Aerodynamischer Windabweiser mit einstellbarer Neigung für Lastkraftwagen
Tilt-adjustable aerodynamic deflector for utility vehicles

(43) Date de publication de la demande: 11.10.2000
(73) Titulaire: Noviplast, 58130 Guerigny (FR)
(72) Inventeur: Pivron, Jean Maurice, 58700 Premery (FR)
(74) Mandataire: de Saint-Palais, Arnaud Marie

(56) Documents cités:
- EP-A- 0 349 746
- DE-A- 3 213 820
- FR-A- 2 769 572
- US-A- 4 470 628
- US-A- 4 784 424
- US-A- 5 249 837

## Description

La présente invention concerne un déflecteur aérodynamique pour véhicule utilitaire.

Elle s'applique notamment, mais non exclusivement, aux véhicules de type poids lourd, présentant une caisse, remorque ou semi-remorque de forme parallélépipédique plus haute que la cabine ou pavillon du véhicule.

Pour améliorer l'aérodynamique de tels véhicules, on a déjà proposé de monter sur leur cabine un déflecteur de forme aérodynamique présentant une inclinaison proche de celle du pare-brise du véhicule et une hauteur proche de celle de la caisse. De cette manière, lorsque le véhicule est en mouvement, les filets d'air présentent dans un plan vertical passant par l'axe longitudinal du véhicule une trajectoire sensiblement courbe de la face frontale de la cabine jusqu'au sommet de la caisse.

Toutefois, il s'avère que la différence de hauteur entre la cabine et la caisse du véhicule n'est pas constante d'un véhicule à l'autre. Il en est de même pour un véhicule destiné à tracter des remorques, celles-ci pouvant être de différentes hauteurs.
Pour tenter de résoudre ce problème, on a proposé des déflecteurs dont l'inclinaison est réglable. Ces déflecteurs peuvent être montés pivotant directement sur le toit de la cabine grâce à une conformation appropriée de celle-ci, comme dans l'exemple décrit dans le brevet DE 38 00 742. En variante, ces déflecteurs sont montés sur une armature métallique fixée sur la cabine et comprenant un axe tubulaire ou des paliers voire des charnières sur lequel le déflecteur est monté pivotant. Cette solution dont un exemple est décrit dans le brevet US-A-4 470 625 implique l'incorporation d'inserts dans le déflecteur pour pouvoir le fixer sur l'armature métallique. Il est en outre nécessaire de prévoir des éléments démontables de différentes formes pour masquer l'armature métallique et obturer les ouvertures de géométrie variable entre le toit de la cabine et les bords latéraux inférieurs du déflecteur.

Le montage d'un tel déflecteur met donc en oeuvre un nombre de pièces relativement important. Il en résulte des coûts de fabrication et de montage élevés.

Il a été également proposé par le brevet DE-A-32 13 820 un déflecteur comprenant un socle apte à se fixer sur le toit de la cabine et un déflecteur articulé sur le socle au moyen de charnières rapportées. De ce fait, cette solution présente les inconvénients précédemment évoqués.

La présente invention a pour but de supprimer ces inconvénients. A cet effet, elle propose un déflecteur aérodynamique comprenant un socle conçu pour se fixer sur le toit de la cabine d'un véhicule et un capot déflecteur de forme aérodynamique conçu pour se fixer sur le socle, ledit socle présentant deux flancs latéraux verticaux et une partie antérieure reliée par chacune de ses extrémités respectivement aux deux flancs latéraux et venant se fixer vers l'avant du toit de la cabine, le capot comprenant des rebords latéraux inférieurs dont la forme et les dimensions sont tels qu'ils restent en contact avec les flancs latéraux du socle lorsque le capot pivote par rapport au socle autour d'un axe parallèle à ladite partie antérieure.

Un tel déflecteur est par exemple connu du document DE-A- 3 213 820 susmentionné.

Selon l'invention, ce déflecteur est caractérisé en ce que ladite partie antérieure présente un rebord antérieur supérieur ayant la forme d'une gouttière rectiligne de section semi-circulaire, ouverte vers le haut, et en ce que le rebord antérieur du capot déflecteur présente une forme complémentaire de manière à pouvoir s'engager dans ladite gouttière et à obtenir une effet de charnière permettant au capot de pivoter autour d'un axe parallèle auxdits rebords antérieurs.

L'invention permet ainsi de remplacer à la fois l'armature métallique composée d'un grand nombre de pièces assemblées, et les éléments d'habillage de cette armature, par un socle formé d'une seule pièce sur lequel un capot constituant le déflecteur proprement dit, peut s'articuler. Elle permet également de simplifier le montage, la pose et le réglage du déflecteur, dans la mesure où il suffit simplement de poser le capot déflecteur sur le socle de manière à engager la partie antérieure du capot dans la gouttière du socle, pour obtenir l'effet de charnière facilitant le réglage de l'inclinaison du capot.

Avantageusement, le socle et le capot déflecteur sont chacun réalisés par moulage d'une seule pièce.
Le déflecteur selon l'invention ne fait donc intervenir que deux pièces qui peuvent être fabriquées d'une manière très simple. Il en résulte une importante réduction du coût de fabrication et de montage.

Un mode de réalisation du dispositif selon l'invention sera décrit ci-après, à titre d'exemple non limitatif, avec référence aux dessins annexés dans lesquels :
La figure 1 représente en perspective une vue éclatée du déflecteur selon l'invention ;
La figure 2 montre la vue latérale du déflecteur représenté sur la figure 1, monté sur la cabine d'un véhicule ;
La figure 3 montre en détail la vue latérale éclatée d'une coupe longitudinale de la partie antérieure du déflecteur représenté sur la figure 1 ;
La figure 4 montre la vue arrière d'une coupe transversale du déflecteur représenté sur la figure 1.

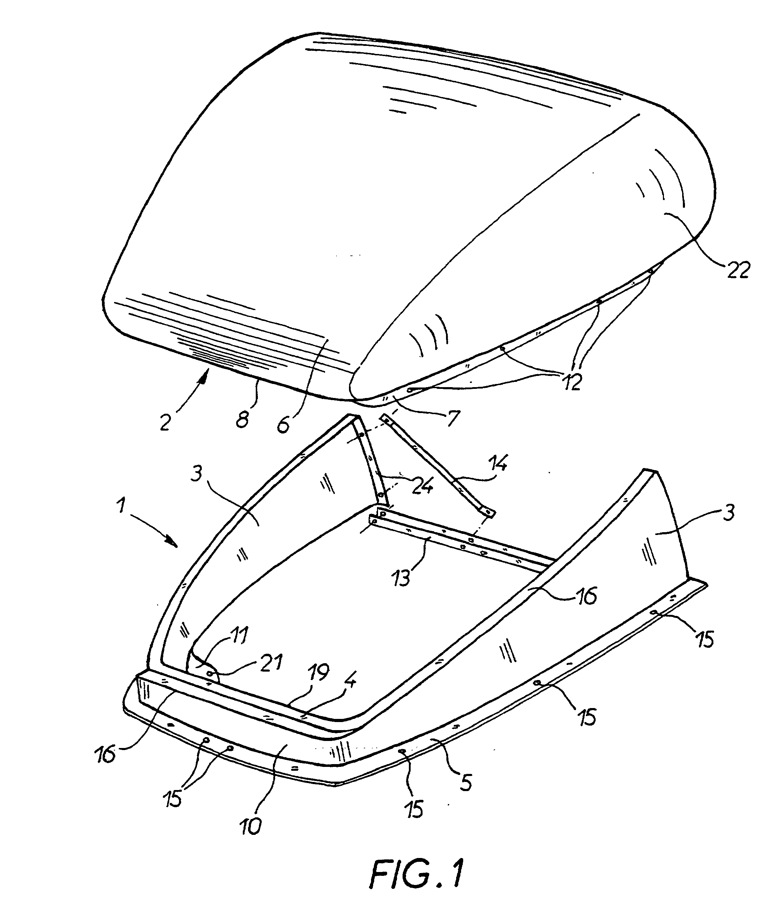

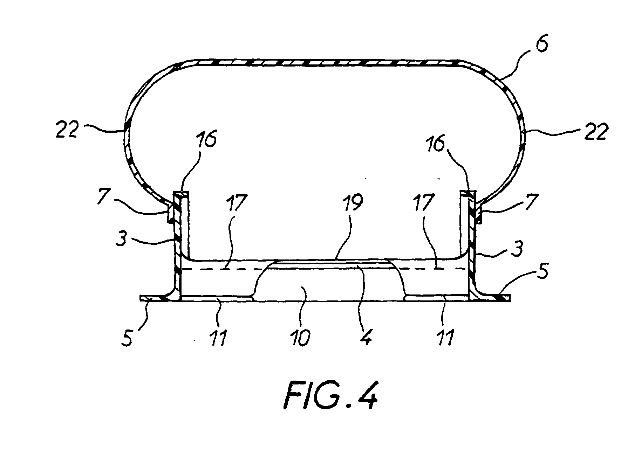

Les figures 1 à 4 représentent un déflecteur pour véhicule utilitaire, tel qu'un camion constitué d'une cabine 26 et d'une caisse 25, ce déflecteur comprenant un socle 1 conçu pour se fixer sur le toit 9 de la cabine et un capot déflecteur 2 de forme aérodynamique venant se fixer sur le socle 1.
Le socle 1 de forme générale en U comprend une partie antérieure 10correspondant à la base du U destinée à être montée vers l'avant du véhicule, et deux flancs latéraux 3 parallèles, correspondant aux branches du U, venant se placer parallèlement aux flancs latéraux du véhicule.

Les flancs latéraux 3 présentent une forme sensiblement plane, s'élargissant progressivement verticalement vers le haut, de la partie antérieure 10 à leur extrémité.
Le socle 1 comprend un rebord inférieur 5 s'étendant vers l'extérieur et dont la forme générale épouse celle du toit 9 de la cabine du camion, ce rebord pouvant être fixé sur le toit de la cabine soit par collage, soit au moyen de vis engagées dans des perçages 15 réalisés dans ce rebord.

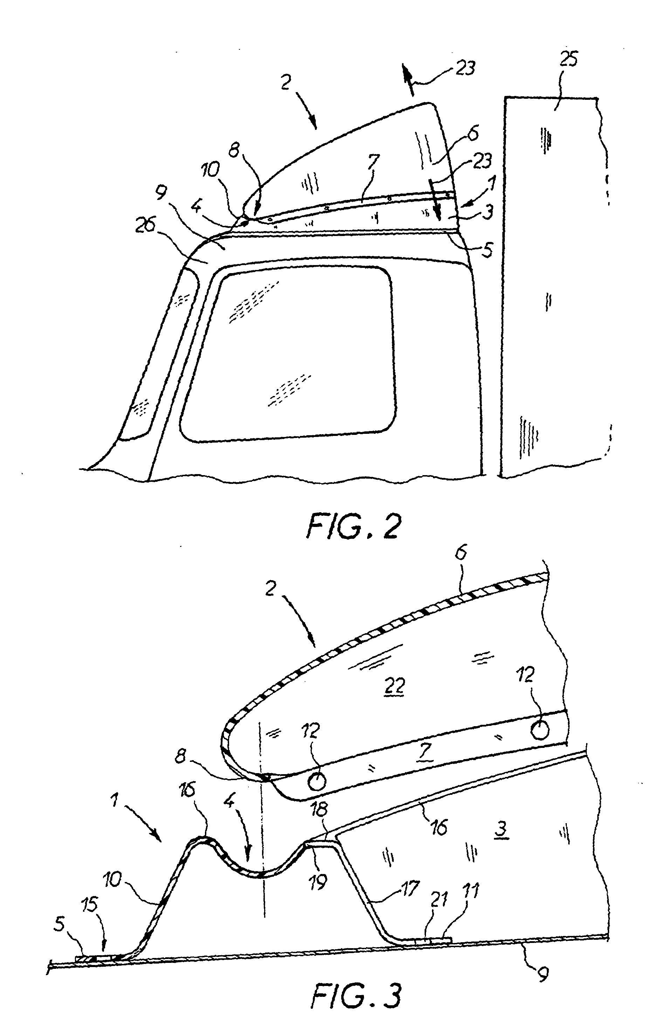

Il comprend également un rebord supérieur 16 et postérieur 24 s'étendant vers l'intérieur permettant d'améliorer la rigidité de la structure. Tel représenté plus en détail sur la figure 3, le rebord supérieur 16 de la partie antérieure 10 du socle 1 est élargi de manière à former une gouttière 4 rectiligne, de section semi-circulaire orientée sensiblement vers le haut. Pour renforcer cette structure, le bord postérieur 19 de la gouttière 4 est prolongé sur une certaine longueur à chacune de ses extrémités latérales, vers l'arrière par une partie sensiblement horizontale 18, puis vers le bas par une paroi 17, de manière à présenter une section transversale sensiblement en forme de M.

La paroi 17 comprend un rebord inférieur 11 venant s'appliquer contre le toit 9 du véhicule, ce rebord étant collé ou fixé par des vis engagées dans des perçages 21.

Par ailleurs, le capot 2 comprend des flancs latéraux 22 bombés de forme sensiblement semi-circulaire et une partie supérieure 6 qui s'élargissent progressivement vers le haut et latéralement de l'avant vers l'arrière, ainsi qu'une partie antérieure 8 semi cylindrique ayant une forme complémentaire à celle de la gouttière 4, destinée à s'engager dans cette dernière de manière pivotante pour obtenir un effet de charnière.
Les flancs latéraux 22 sont prolongés par un rebord vertical 7 muni de perçages 12 dans lesquels peuvent être engagées des vis pour fixer le capot 2 sur le socle 1. A cet effet, une fois que le socle 1 est fixé sur le toit 9 de la cabine du véhicule, on engage la partie antérieure 8 du capot 2 dans la gouttière 4, cet assemblage formant une charnière permettant au capot 2 de pivoter dans la gouttière 4 du socle 1 vers le bas ou vers le haut, comme indiqué par les flèches 23 montrées sur la figure 2.

La forme du rebord 7 est telle qu'il reste en contact parfait sur toute sa longueur avec les flancs latéraux 3 du socle 1, lorsque la partie antérieure 8 est engagée dans la gouttière 4, quelle que soit la position angulaire du capot 2 par rapport au socle 1, lorsque l'angle entre le rebord 7 du capot déflecteur 2 et le rebord 5 du socle 1 est compris entre 0 et 30°.
Autrement dit, la forme et les dimensions des flancs latéraux 3 du socle 1 sont tels que les rebords latéraux inférieurs 7 du capot 2 restent en contact avec les flancs latéraux 3 lorsque l'angle entre le rebord 7 et le rebord inférieur 5 du socle est compris entre 0 et 30°.

Lorsque la position angulaire idéale du capot 2 est atteinte, cette position dépendant de la hauteur de la cabine 26 par rapport à celle de la caisse 25 du véhicule, il suffit de percer des trous dans les flancs latéraux 3 du socle dans l'alignement des perçages 12 et d'y engager des vis qui sont ensuite serrées par des écrous.

Le socle 1 peut être rendu encore plus rigide au moyen d'une traverse 13 fixée à ses extrémités aux deux flancs latéraux 3, par exemple sur le rebord 24 s'étendant vers l'intérieur du socle. De même, les flancs latéraux 3 du socle peuvent être maintenus verticalement par deux tirants 14 fixés à une extrémité au rebord 24 du flanc latéral 3 respectif et à l'autre extrémité à la traverse 13.

Le socle 1 et le capot 2 sont avantageusement réalisés par moulage d'une matière synthétique, telle que de la résine époxy.

## Revendications

1. Déflecteur aérodynamique comprenant un socle (1) conçu pour se fixer sur le toit (9) de la cabine (26) d'un véhicule et un capot déflecteur (2) de forme aérodynamique conçu pour se fixer sur le socle (1), ledit socle (1) présentant deux flancs latéraux verticaux (3) et une partie antérieure (10) reliée par chacune de ses extrémités respectivement aux deux flancs latéraux et venant se fixer vers l'avant du toit (9) de la cabine (26), le capot comprenant des rebords latéraux inférieurs (7) dont la forme et les dimensions sont tels qu'ils restent en contact avec les flancs latéraux (3) du socle (1) lorsque le capot (2) pivote par rapport au socle (1) autour d'un axe parallèle à ladite partie antérieure (10),
**caractérisé en ce que** ladite partie antérieure (10) présente un rebord antérieur supérieur (16) ayant la forme d'une gouttière (4) rectiligne de section semi-circulaire, ouverte vers le haut, et **en ce que** le rebord antérieur (8) du capot déflecteur (2) présente une forme complémentaire de manière à pouvoir s'engager dans ladite gouttière (4) et à obtenir une effet de charnière permettant au capot (2) de pivoter autour dudit axe parallèle à ladite partie antérieure (10) du socle (1) et parallèle auxdits rebords antérieurs (16), (8).

2. Déflecteur selon la revendication 1,
**caractérisé en ce que** la forme et les dimensions des flancs latéraux (3) du socle (1) sont tels que les rebords latéraux inférieurs (7) du capot (2) restent en contact avec les flancs latéraux (3) du socle (1) lorsque l'angle entre le rebord (7) et le bord inférieur du socle (1) est compris entre 0 et 30°.

3. Déflecteur selon la revendication 1,
**caractérisé en ce que** le socle (1) comprend un rebord inférieur (5) s'étendant vers l'extérieur qui épouse la forme du toit (9) de la cabine (26) du véhicule.

4. Déflecteur selon la revendication 3,
**caractérisé en ce que** la gouttière (4) comprend un bord postérieur (19) qui est prolongé sur une certaine longueur à chacune de ses extrémités latérales, vers l'arrière par une partie sensiblement horizontale (18), puis vers le bas par une paroi (17), de manière à présenter une section transversale sensiblement en forme de M.

5. Déflecteur selon l'une des revendications précédentes,
**caractérisé en ce que** les flancs latéraux (3) du socle (1) présentent une forme sensiblement plane, s'élargissant progressivement verticalement vers le haut, de la partie antérieure (10) à leur extrémité.

6. Déflecteur selon l'une des revendications 3 à 5,
**caractérisé en ce que** le capot (2) comprend des flancs latéraux (22) bombés de forme sensiblement semi-circulaire et une partie supérieure (6) qui s'élargissent progressivement vers le haut et latéralement de l'avant vers l'arrière, ainsi qu'une partie antérieure (8) semi cylindrique ayant une forme complémentaire à celle de la gouttière (4), pour s'engager dans cette dernière de manière pivotante.

7. Déflecteur selon l'une des revendications précédentes,
**caractérisé en ce que** les rebords latéraux inférieurs (7) du capot (2) sont munis de perçages (12) dans lesquels peuvent être engagées des vis pour fixer le capot (2) sur le socle (1).

8. Déflecteur selon l'une des revendications précédentes,
**caractérisé en ce que** le socle (1) et le capot (2) sont chacun réalisés par moulage en une seule pièce.

9. Déflecteur selon l'une des revendications précédentes,
**caractérisé en ce que** le socle (1) et le capot (2) sont réalisés en résine époxy.

## Claims

1. An aerodynamic deflector consisting of a base (1) designed to be fixed to the roof (9) of the cab (26) of a vehicle, and a deflecting hood (2) of aerodynamic shape designed to be fixed to the base (1), where the said base (1) has two vertical lateral sidewalls (3) and a front section (10) which is attached at its two ends to each of the lateral sidewalls respectively, and is fixed to the front of the roof (9) of the cab (26), the said hood also having lower lateral edges (7) whose shape and dimensions are such that it remains in contact with the lateral sidewalls (3) of the base (1) when the hood (2) pivots in relation to the base (1) about an axis which is parallel to the said front section (10),
**characterised in that** the said front section (10) has a top front edge (16) in the shape of a rectilinear trough (4) of semicircular shape and open at the top, and **in that** the front edge (8) of the deflecting hood (2) has a complementary shape so that it is able to fit into the said trough (4) and to create a hinge effect that enables the hood (2) to pivot about the said axis parallel to the said front section (10) of the base (1) and parallel to the said front edges (16),(8).

2. A deflector according to claim 1,
**characterised in that** the shape and the dimensions of the lateral sidewalls (3) of the base (1) are such that the lower lateral edges (7) of the hood (2) remain in contact with the lateral sidewalls (3) of the base (1) when the angle between the edge (7) and the lower edge of the base (1) is between 0 and 30°.

3. A deflector according to claim 1,
**characterised in that** the base (1) includes a lower edge (5) extending outward and following the shape of the roof (9) of the cab (26) of the vehicle.

4. A deflector according to claim 3,
**characterised in that** the trough (4) has a rear edge (19) which is extended for a certain distance at each of its lateral extremities toward the rear by means of a section (18) which is approximately horizontal, and then downward by means of a panel (17) in order to create a transverse section that is more or less in the shape of an M.

5. A deflector according to one of the preceding claims,
**characterised in that** the lateral sidewalls (3) of the base (1) have a shape which is more or less flat, and which progressively broadens vertically upward, from the front section (10) to their extremity.

6. A deflector according to claims 3 to 5,
**characterised in that** the hood (2) includes lateral sidewalls (22) which are curved into an approximately semi-circular shape, and an upper section (6) which progressively broadens upward and laterally from the front to the back, and a semi-cylindrical front section (8) with a shape which is complementary to that of the trough (4), so that it fits into the latter in a pivoting manner.

7. A deflector according to one of the preceding claims,
**characterised in that** the lower lateral edges (7) of the base (2) have drilled holes (12) in which screws can be inserted in order to secure the hood (2) to the base (1).

8. A deflector according to one of the preceding claims,
**characterised in that** the base (1) and the hood (2) are each manufactured by moulding into a single section.

9. A deflector according to one of the preceding claims,
**characterised in that** the base (1) and the hood (2) are manufactured from epoxy resin.

## Patentansprüche

1. Aerodynamischer Deflektor mit einem Sockel (1), so gestaltet, um an der Decke (9) der Kabine (26) eines Fahrzeugs befestigt zu werden, und eine aerodynamische Schutzhaube (2) zur Befestigung auf dem Sockel (1), wobei besagter Sockel (1) zwei senkrechte Seitenflanken (3) aufweist, und ein Vorderteil (10), das durch jedes seiner Enden entsprechend mit den zwei Seitenflanken verbunden und zur Vorderseite der Decke (9) der Kabine (26) hin befestigt wird, wobei die Schutzhaube untere Seitenränder (7) umfasst und die Form und die Abmessungen so ausgelegt sind, dass sie mit den Seitenflanken (3) des Sockels (1) in Berührung kommen, wenn sich die Schutzhaube (2) relativ zum Sockel (1) um eine parallele Achse am besagten Vorderteil (10) dreht, **dadurch gekennzeichnet, dass** besagtes Vorderteil (10) einen nach oben offenen, geradlinigen oberen Vorderrand (16) in Form einer Traufe (4) mit halbkreisförmigem Schnitt aufweist, und dass der obere Vorderrand (8) der Schutzhaube (2) eine komplementäre Form aufweist, um in besagter Traufe (4) einzugreifen und so eine Scharnierwirkung zu erhalten, wodurch es möglich wird, die Schutzhaube (2) um die genannte parallele Achse zu besagtem Vorderteil (10) des Sockels (1) zu drehen und parallel zu den genannten vorderen □Rändern (16), (8).

2. Deflektor nach Anspruch 1, **dadurch gekennzeichnet, dass** die Form und die Abmessungen der Seitenflanken (3) des Sockels (1) so ausgelegt sind, dass die unteren Seitenränder (7) der Schutzhaube (2) mit den Seitenflanken (3) des Sockels (1) in Berührung kommen, wenn der Winkel zwischen dem Rand (7) und dem unteren Rand des Sockels (1) zwischen 0 und 30° liegt.

3. Deflektor nach Anspruch 1, **dadurch gekennzeichnet, dass** der Sockel (1) einen unteren Rand (5) aufweist, der sich nach außen hin an die Form der Decke (9) der Kabine (26) des Fahrzeugs anpasst.

4. Deflektor nach Anspruch 3, **dadurch gekennzeichnet, dass** die Traufe (4) einen hinteren Rand (19) umfasst, der an jeder seiner seitlichen Enden auf eine bestimmte Länge verlängert ist, d. h. nach hinten durch ein deutlich waagerechtes Teil (18), dann nach unten durch eine Wand (17), so um einen deutlichen M-förmigen Querschnitt darzustellen.

5. Deflektor nach einem der vorangehenden Ansprüche, **dadurch gekennzeichnet, dass** die Seitenflanken (3) des Sockels (1) deutlich eine ebene, sich progressiv senkrecht nach oben erweiternde Form des Vorderteils (10) an deren Ende aufweist.

6. Deflektor nach einem der Ansprüche 3 bis 5, **dadurch gekennzeichnet, dass** die Schutzhaube (2) deutlich halbkreisförmig gewölbte Seitenflanken (22) und ein Oberteil (6) umfasst, die sich progressiv nach oben und seitlich von der Vorderseite her nach hinten erweitern sowie ein halbzylindrisches Vorderteil (8), das eine komplementäre Form zur Form der Traufe (4) bekommt, um in letztere drehbar einzugreifen.

7. Deflektor nach einem der vorangehenden Ansprüche, **dadurch gekennzeichnet, dass** die unteren Seitenränder (7) der Schutzhaube (2) mit Bohrungen (12) versehen sind, in denen Schrauben eingeführt werden können, um die Schutzhaube (2) auf dem Sockel (1) zu befestigen.

8. Deflektor nach einem der vorangehenden Ansprüche, **dadurch gekennzeichnet, dass** der Sockel (1) und die Schutzhaube (2) je in einem einteiligen Formgussteil ausgeführt sind.

9. Deflektor nach einem der vorangehenden Ansprüche, **dadurch gekennzeichnet, dass** der Sockel (1) und die Schutzhaube (2) in Epoxy-Harz ausgeführt sind.
